# FASCICULE DE BREVET EUROPEEN

(11) **EP 3 636 410 B1**
(45) Date de publication et mention de la délivrance du brevet: **04.08.2021**
(21) Numéro de dépôt: 19201497.5
(22) Date de dépôt: 04.10.2019
(51) Int. Cl.: B29C 45/26, B29C 45/14, B29C 45/16, B29L 31/30

(54) **PROCÉDÉ DE FABRICATION D'UNE PIÈCE SURMOULÉE FORMANT PIÈCE STRUCTURELLE DE VÉHICULE**
HERSTELLUNGSVERFAHREN EINES AUFFORMTEILS, DAS EIN STRUKTURTEIL EINES FAHRZEUGS BILDET
METHOD FOR MANUFACTURING AN OVERMOULDED PART FORMING A STRUCTURAL PART OF A VEHICLE

(30) Priorité: 12.10.2018 FR 1859495
(43) Date de publication de la demande: 15.04.2020
(73) Titulaire: Compagnie Plastic Omnium, 69007 Lyon (FR)
(72) Inventeur: HUMMER, Emilien, 01150 Sainte-Julie (FR); VIRELIZIER, François, 01150 Sainte-Julie (FR); TORRES, Olivier, 01150 Sainte-Julie (FR); BRIZIN, Jérôme, 01150 Sainte-Julie (FR)
(74) Mandataire: LLR

(56) Documents cités:
- US-A1- 2003 116 886
- US-A1- 2005 037 105
- US-A1- 2008 054 049
- US-A1- 2011 298 244

## Description

La présente demande concerne le domaine technique de la fabrication des pièces structurelles en matière plastique de véhicule automobile, en particulier, mais de façon non exclusive, des hayons.

Un hayon plastique est constitué de deux panneaux principaux : un panneau interne structurel, dit caisson, et un panneau extérieur d'aspect, dit peau. Selon les cahiers des charges mécaniques et le matériau choisi pour le caisson, il est connu de devoir le renforcer localement dans les zones à très fortes concentrations de contraintes, notamment quand il constitué de matière thermoplastique, par des inserts de renfort métalliques surmoulés dans le caisson.

Désormais, pour alléger encore davantage les véhicules automobiles, on cherche plutôt à réaliser des pièces structurelles de véhicule automobile intégralement en matériaux plastiques ou composites, y compris pour les renforts locaux. À cette fin, il est connu, pendant le surmoulage, de faire passer la matière du caisson au travers de trous débouchant, disposés dans l'épaisseur de l'insert. Cependant, certains procédés d'obtention de l'insert de renfort ne permettent pas d'obtenir facilement ces trous lors du moulage, qui doivent alors être réalisés lors d'une étape ultérieure, dite en reprise. Ainsi, par exemple, si l'insert est réalisé en extrusion ou en moulage par compression d'un matériau composite thermodurcissable, il est connu de percer ou poinçonner l'insert après sa sortie du moule aux endroits souhaités. Ce procédé en reprise est toutefois fois long et coûteux.

Pour surmonter cet inconvénient, le document FR 2 928 100 propose un procédé de fabrication d'une pièce surmoulée formant une pièce structurelle de véhicule automobile, comprenant une étape de moulage lors de laquelle on moule au moins un élément de la pièce en un premier matériau à base de matière thermodurcissable, à l'aide d'un moule conformé pour qu'au moins une portion de l'élément forme un voile de matière, puis on surmoule l'élément par un deuxième matériau à base de matière thermoplastique de sorte que le voile rompe sous la pression du deuxième matériau, un passage pour le deuxième matériau étant alors formé au travers de l'élément.

Malgré les améliorations que le procédé de FR 2 928 100 apporte, ce dernier était prévu, à l'époque, pour la fabrication de pièces dont l'insert était réalisé essentiellement en composites à base de fibres de verre.

Or, pour alléger encore davantage les véhicules automobiles, on cherche dorénavant à réaliser des pièces structurelles de véhicule automobile en matériau composite dont l'insert n'est plus réalisé à base de fibres de verre coupées, mais à base de renforts de fibres plus performants, comme un tissu de fibres (de verre) ou des fibres de carbone.

Les matériaux composites réalisés à base de tissus de fibres ou de fibres de carbone étant à épaisseur de matière égale, plus résistants que les matériaux à base de fibres de verre, le procédé évoqué dans FR 2 928 100 devient plus difficile à mettre en œuvre. En effet, il est plus difficile de rompre le voile de matériau thermodurcissable à base de fibres de carbone sous la pression d'injection de surmoulage du deuxième matériau à base de matière thermoplastique.

On connaît également des documents US 2008/054049 et US 2005/037105 des procédés de fabrication d'une pièce surmoulée formant une pièce structurelle de véhicule automobile dans lesquels on moule un élément de la pièce en un premier matériau à base de résine thermoplastique à l'aide d'un moule conformé pour qu'une une portion de l'élément formant un opercule de matière fermant un orifice et on surmoule un deuxième matériau à base de résine thermoplastique, de sorte que l'opercule rompe sous la pression d'injection et que l'orifice soit rempli par le deuxième matériau au travers de l'élément.

On connaît également du document US 2003/116886 un procédé de fabrication d'une pièce par moulage par injection dans un premier matériau dans lequel un orifice débouchant est pratiqué dans une pièce à l'aide d'un poinçon.

L'invention a pour but de remédier à cet inconvénient en fournissant un procédé de fabrication d'une pièce structurelle de véhicule automobile par surmoulage, comprenant :
- une étape de moulage lors de laquelle on moule un élément de renfort de la pièce en un premier matériau à base de résine thermodurcissable, à l'aide d'un moule conformé pour qu'au moins une portion de l'élément forme un opercule de matière fermant un orifice non débouchant,
- une étape de surmoulage par injection de l'élément de renfort lors de laquelle on surmoule un deuxième matériau à base de résine thermoplastique, de sorte que l'opercule rompe sous la pression d'injection et que l'orifice soit rempli par le deuxième matériau au travers de l'élément,
**caractérisé en ce que**, la portion de l'élément en premier matériau étant délimitée, au niveau de l'opercule, par deux parois opposées, et l'opercule étant délimité par aux moins deux surfaces opposées, l'opercule est formé dans l'épaisseur de l'élément, de sorte que les surfaces de l'opercule se trouvent chacune à une distance non nulle des parois de l'élément.

Grâce au fait que l'opercule soit formé dans l'épaisseur de l'élément, à une distance non nulle des parois de l'élément, l'opercule ne se trouve plus affleurant dans le prolongement de la surface libre de l'élément. Ainsi, lors du remplissage de l'orifice, , le flux de deuxième matériau progresse tangentiellement le long de la paroi libre de l'élément, puis peut s'engager localement dans l'orifice encore comblé par l'opercule. De ce fait, le flux de deuxième matériau exerce une pression dans l'orifice selon une direction transversale aux surfaces délimitant l'opercule et directement contre l'opercule, ce qui permet de le rompre plus facilement.

De sorte à faciliter encore davantage la rupture de l'opercule par l'injection du deuxième matériau, l'opercule est positionné sensiblement à égale distance de deux parois de l'élément.

Selon un mode de réalisation préféré de l'invention, le moule de l'élément de renfort comprend une matrice et un poinçon, délimitant une chambre de moulage, le poinçon comprenant une broche de compactage faisant saillie à partir du poinçon de sorte à diminuer localement l'épaisseur de la chambre de moulage, l'opercule étant formé dans l'espace réduit restant entre l'extrémité libre de la broche de compactage et la matrice, de préférence entre une contreforme en saillie par rapport à la matrice en regard de l'extrémité libre de la broche de compactage.

De préférence, l'extrémité de la broche de compactage comprend une portion dont la section se réduit vers l'extrémité libre de la broche de compactage, de sorte à créer une réduction de la section de passage de l'orifice. La réduction de la section de passage de l'orifice permet de créer un point d'ancrage du matériau thermoplastique dans le matériau thermodurcissable, favorisant ainsi la cohésion des deux matériaux localement tenue mécanique de l'insert dans la pièce structurelle, et permettant donc l'obtention d'une pièce mécaniquement plus résistante.

Selon un mode de réalisation particulier, la contreforme est de section réduite par rapport à l'extrémité de la broche de compactage, de sorte à créer une réduction de la section de passage de l'orifice.

Avantageusement, afin d'alléger la pièce ainsi fabriquée, le premier matériau est un matériau composite renforcé par des fibres de carbone.

De préférence, le deuxième matériau est le polypropylène (PP).

Afin de faciliter la rupture de l'opercule, l'épaisseur de l'opercule est inférieure à 0,5 mm, de préférence inférieure à 0,3 mm.

Toujours afin de faciliter sa rupture, l'opercule est composé sensiblement uniquement de fibres de carbone.

Selon un mode de réalisation particulier de l'invention, on forme une nervure, réalisée dans le deuxième matériau, recouvrant au moins un orifice formé au travers de l'élément structurel. On profite ainsi de la présence d'un orifice réalisé dans l'élément de façon à le renforcer davantage par l'ajout d'une nervure.

L'invention concerne également un moule de fabrication d'une pièce surmoulée selon la revendication 9.

L'invention concerne également un hayon de véhicule automobile comprenant un tel élément de renfort.

Nous allons maintenant présenter un mode de réalisation de l'invention donné à titre d'exemple non limitatif et à l'appui des figures annexées sur lesquelles :
- la figure 1 est une vue en coupe d'un moule selon un premier mode de réalisation de l'invention muni d'un poinçon pour la mise en oeuvre du procédé selon l'invention ;
- la figure 2 est une vue en coupe d'une portion d'un élément de renfort d'une pièce structurelle de véhicule automobile fabriqué à l'aide du moule de la figure 1 ;
- la figure 3 est une vue similaire à la figure 1 d'un moule selon un deuxième mode de réalisation de l'invention ;
- la figure 4 est une vue similaire à la figure 1 d'un moule selon un troisième mode de réalisation de l'invention ;
- la figure 5 est une vue similaire à la figure 2 d'une portion d'un élément de renfort d'une pièce structurelle de véhicule automobile fabriqué à l'aide du moule de la figure 3 ou la figure 4.
- La figure 6 est une vue similaire à la figure 2 d'une portion d'un élément de renfort d'une pièce structurelle de véhicule automobile fabriqué à l'aide d'un moule selon l'invention selon une variante de l'invention ;
- La figure 7 est une vue similaire à la figure 2 d'une portion d'un élément de renfort d'une pièce structurelle de véhicule automobile fabriqué à l'aide d'un moule selon l'invention selon une autre variante de l'invention.

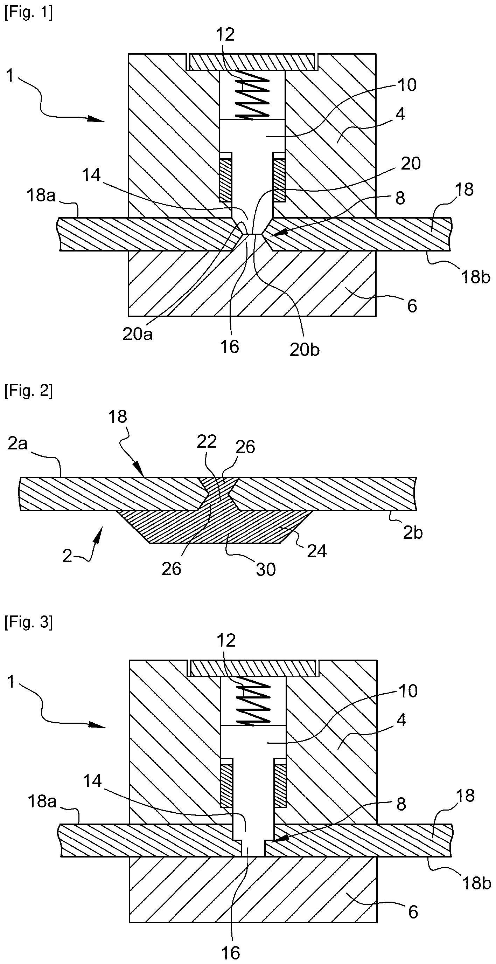

On a représenté à la figure 1 un moule de fabrication 1 d'une pièce surmoulée 2 selon un premier mode de réalisation de l'invention. La pièce surmoulée 2, dont une partie est représentée sur les figures 2 et 3, est une pièce structurelle de véhicule automobile. Il peut notamment s'agir d'un élément de renfort d'un hayon de véhicule automobile.

Le moule 1 comprend une première partie formant poinçon 4 et une deuxième partie formant matrice 6, délimitant ainsi une chambre de moulage 8.

Le poinçon 4 est muni d'une broche de compactage 10, qui de façon classique, est accueillie dans un logement du poinçon 4, et est par exemple retenue par des moyens de rappel tels qu'un ressort 12. Lors de la fermeture du moule 1, le ressort permet d'absorber les dispersions de compactage, de sorte à éviter un endommagement de la broche de compactage 10. La broche de compactage 10 fait saillie à partir du poinçon 4 de sorte à diminuer localement l'épaisseur de la chambre de moulage 8.

Dans le mode de réalisation illustré sur les figures, la broche de compactage 10 est par exemple de forme cylindrique de révolution.

De préférence, l'extrémité libre 14 de la broche de compactage comprend une portion de révolution dont la section se réduit vers l'extrémité libre de la broche de compactage 14. L'extrémité libre 14 de la broche de compactage se termine par une extrémité de compactage sensiblement plane.

Dans le mode de réalisation représenté à la figure 1, la section de la broche de compactage 14 se réduit de façon continue vers l'extrémité libre 14 de la broche de compactage, de sorte que la portion de révolution à l'extrémité libre 14 de la broche de compactage soit de forme conique, le cône étant tronqué à son extrémité de sorte à se terminer par une extrémité sensiblement plane.

La matrice 6 comprend une contreforme 16 en regard de l'extrémité libre 14 de la broche de compactage. Dans le premier mode de réalisation de l'invention illustré à la figure 1, la forme de la contreforme 16 est identique à celle de l'extrémité libre 14 de la broche de compactage. Dans le mode de réalisation représenté sur la figure 1, la contreforme 16 est donc conique, le cône étant tronqué à son extrémité de sorte à se terminer par une section plane.

Le moule de fabrication 1 permet de mettre en oeuvre un procédé de fabrication d'une pièce surmoulée 2 selon l'invention dont on va maintenant décrire les étapes principales.

Au cours d'une première étape de moulage, on moule au moins un élément 18 de la pièce en un premier matériau à base de résine thermodurcissable. De préférence, le premier matériau est un matériau composite renforcé par des fibres de carbone, de verre, d'aramide, naturelles, etc. ou un tissu de ces fibres. De préférence, les fibres de renforcement sont composées uniquement de fibres de carbone ou d'un tissu de fibre de verres.

La portion de l'élément 18 en premier matériau est délimitée, au niveau de l'opercule, par deux parois opposées 18a, 18b. En l'occurrence, ces parois 18a, 18b sont sensiblement planes et parallèles, mais elles peuvent être galbées.

L'étape de moulage est réalisée à l'aide du moule 1 qui est configuré pour qu'au moins une portion de l'élément forme un opercule 20 de matière fermant un orifice 22 non débouchant. On notera que sur les figures, l'orifice 22 est comblé soit par la broche 10, soit par le second matériau 24.

En effet, l'étape de moulage est réalisée par déplacement de la broche de compactage 10 vers la matrice 6, qui vient compacter la matière du premier élément 18 de sorte à former l'opercule 20 dans l'espace réduit restant entre l'extrémité libre 14 de la broche de compactage et la matrice 6.

Plus précisément, l'opercule 20 est formé dans l'espace réduit restant entre l'extrémité libre 14 de la broche de compactage et la contreforme 16. Ainsi, l'opercule 20 est délimité par aux moins deux surfaces opposées 20a, 20b.Les extrémités de la broche de compactage 10 et de la contreforme 16 étant sensiblement planes, ces deux surfaces 20a, 20b sont également sensiblement planes.

La longueur de la broche de compactage 10 et de la contreforme 16 d'une part, et l'épaisseur de l'élément 18 d'autre part, sont choisis de sorte que l'opercule 20 soit formé dans l'épaisseur de l'élément 18, de sorte que les surfaces de l'opercule 20a, 20b se trouvent chacune à une distance non nulle des parois de l'élément 18a, 18b. De préférence, comme représenté sur les figures, l'opercule 20 est formé sensiblement à égale distance de deux parois de l'élément.

De préférence également, l'épaisseur de l'opercule est inférieure à 0,5 mm, de préférence inférieure à 0,3 mm pour favoriser sa rupture lors de la seconde étape du procédé selon l'invention.

Au cours d'une étape de surmoulage par injection, on surmoule un deuxième matériau 24 à base de résine thermoplastique, de sorte que l'opercule 20 rompe sous la pression d'injection et que l'orifice 22 soit rempli par le deuxième matériau 24 au travers de l'élément 18. Le résultat obtenu est illustré à la figure 2.

Grâce au fait que l'opercule 20 soit formé dans l'épaisseur de l'élément 18, à une distance non nulle des parois 18a, 18b de l'élément, lors du remplissage de l'orifice 22, le flux de deuxième matériau 24 progresse tangentiellement le long de la paroi libre 18a, 18b de l'élément, puis peut s'engager localement dans l'orifice 22 encore comblé par l'opercule 20. De ce fait, le flux de deuxième matériau exerce une pression dans l'orifice selon une direction transversale aux surfaces 20a, 20b délimitant l'opercule et directement contre l'opercule 20, ce qui permet de le rompre plus facilement.

La section de la broche de compactage 10 étant réduite vers son extrémité libre 14, la section de l'orifice 22 ainsi formé dans l'élément 18 se réduit vers l'opercule 20. Deux épaulements 26 sont ainsi formés dans l'épaisseur de l'élément 18, créant un ancrage entre le premier élément 18 et le deuxième matériau 24.

Ceci permet de créer un point d'ancrage du matériau thermoplastique dans le matériau thermodurcissable, favorisant ainsi la tenue mécanique de l'insert dans la pièce structurelle, et permettant donc l'obtention d'une pièce mécaniquement plus résistante.

Selon un deuxième mode de réalisation de l'invention illustré à la figure 3, l'extrémité libre 14 de la broche de compactage a une section réduite par rapport au reste de la broche, en ayant la forme d'un cylindre de révolution de diamètre réduit par rapport au reste de la broche 10, de sorte à créer une réduction de la section de passage de l'orifice 22. Contrairement au mode de réalisation précédent, la réduction de section est discontinue.

Selon un troisième mode de réalisation de l'invention, illustré à la figure 3, l'extrémité libre 14 de la broche de compactage n'a pas une section réduite et la contreforme 16 a une forme de révolution de section réduite par rapport à l'extrémité libre 14 de la broche de compactage, de sorte à créer une réduction de la section de passage de l'orifice 22.

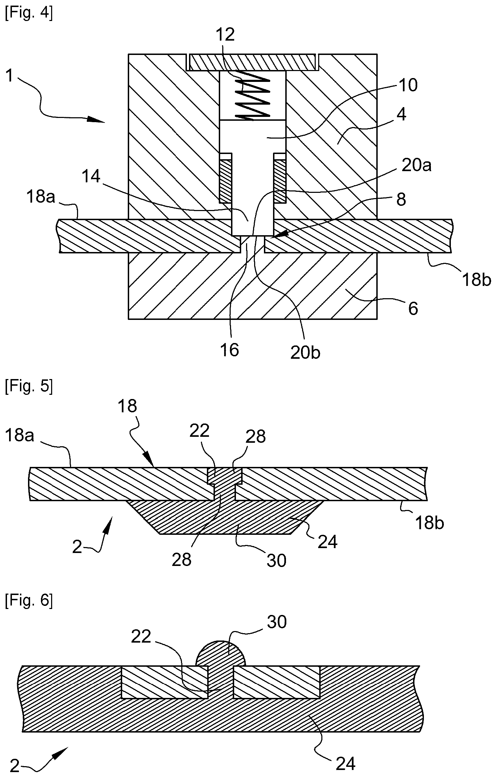

Comme illustré à la figure 5, la réduction de la section de passage de l'orifice 22 permet de réaliser un épaulement 28 dans l'orifice 22, qui permet également de créer un ancrage du deuxième matériau 24 dans la pièce surmoulée 2, une fois le deuxième matériau 24 injecté dans l'orifice 22.

Comme illustré sur les figures 2 et 5, de préférence, on forme une nervure 30, réalisée dans le deuxième matériau 26, recouvrant l'orifice 22 formé au travers de l'élément 18.

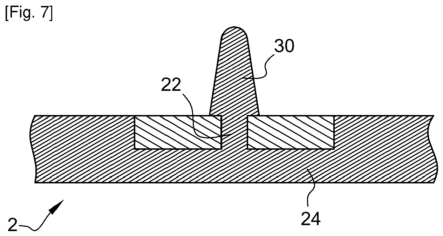

Dans des variantes de l'invention illustrées aux figures 6 et 7, lors de l'injection du deuxième matériau 24 à travers l'orifice 22, on crée, du côté de la paroi 18a, un élément en saillie 30 (ou désaffleurement) venant en contact avec la paroi opposée à celle du côté de laquelle se fait l'injection du deuxième matériau 24 (ici la paroi 18a). La présence de l'élément en saillie 30 venant reposer sur la pièce surmoulée 2 créé un ancrage du deuxième matériau 24 sur la pièce surmoulée 2.

La présence de l'élément en saillie 30 constitue par exemple une alternative à l'ancrage créé par l'épaulement 26.

Dans les variantes représentées aux figures 6 et 7, l'élément en saillie 30 est de révolution. Dans la variante de la figure 6, l'élément en saillie 30 a une forme sensiblement semi-sphérique. Dans la variante de la figure 7, l'élément en saillie a une forme sensiblement conique, arrondie à son extrémité

L'invention n'est pas limitée aux modes de réalisation présentés et d'autres modes de réalisation apparaîtront clairement à l'homme du métier. Il est notamment possible de faire varier les formes de la broche de compactage, ou d'utiliser d'autres matériaux que ceux évoqués. La combinaison des modes de réalisation représentés sur les figures est par ailleurs explicitement prévue.

## Revendications

1. Procédé de fabrication d'une pièce surmoulée (2) formant une pièce structurelle de véhicule automobile, comprenant :
- une étape de moulage lors de laquelle on moule au moins un élément (18) de la pièce en un premier matériau à base de résine thermodurcissable, à l'aide d'un moule (1) conformé pour qu'au moins une portion de l'élément (18) forme un opercule (20) de matière fermant un orifice (22) non débouchant,
- une étape de surmoulage par injection lors de laquelle on surmoule un deuxième matériau (24) à base de résine thermoplastique, de sorte que l'opercule (20) rompe sous la pression d'injection et que l'orifice (22) soit rempli par le deuxième matériau (24) au travers de l'élément (18),
**caractérisé en ce que,** la portion de l'élément (18) en premier matériau étant délimitée, au niveau de l'opercule (20), par deux parois (18a, 18b) opposées, et l'opercule (20) étant délimité par aux moins deux surfaces (20a, 20b) opposées, l'opercule (20) est formé dans l'épaisseur de l'élément (18), de sorte que les surfaces (20a, 20b) de l'opercule se trouvent chacune à une distance non nulle des parois (18a, 18b) de l'élément.

2. Procédé de fabrication selon la revendication 1, dans lequel l'opercule (20) est formé sensiblement à égale distance de deux parois (18a, 18b) de l'élément.

3. Procédé de fabrication selon l'une quelconque des revendications précédentes, dans lequel le moule (1) comprend une matrice (6) et un poinçon (4), délimitant une chambre de moulage (8), le poinçon (4) comprenant une broche de compactage (10) faisant saillie à partir du poinçon (4) de sorte à diminuer localement l'épaisseur de la chambre de moulage (8), l'opercule (20) étant formé dans l'espace réduit restant entre l'extrémité libre (14) de la broche de compactage et la matrice (6), de préférence entre une contreforme (16) en saillie par rapport à la matrice en regard de l'extrémité libre de la broche de compactage (10).

4. Procédé de fabrication selon la revendication 3, dans lequel l'extrémité libre (14) de la broche de compactage comprend une portion de révolution dont la section se réduit vers l'extrémité libre (14) de la broche de compactage, de sorte à créer une réduction de la section de passage de l'orifice (22).

5. Procédé de fabrication selon la revendication 3 ou 4, dans lequel la contreforme (16) est de révolution de section réduite par rapport à l'extrémité libre (14) de la broche de compactage, de sorte à créer une réduction de la section de passage de l'orifice (22).

6. Procédé de fabrication selon l'une quelconque des revendications précédentes, dans lequel le premier matériau est un matériau composite renforcé par des fibres de carbone, de préférence sensiblement uniquement de fibres de carbone.

7. Procédé de fabrication selon l'une quelconque des revendications précédentes, dans lequel l'épaisseur de l'opercule (20) est inférieure à 0,5 mm, de préférence inférieure à 0,3 mm.

8. Procédé de fabrication selon l'une quelconque des revendications précédentes, dans lequel on forme une nervure (30), réalisée dans le deuxième matériau (24), recouvrant au moins un orifice (22) formé au travers de l'élément structurel.

9. Moule de fabrication d'une pièce surmoulée, **caractérisé en ce qu'il** est configuré pour mettre en œuvre le procédé selon l'une quelconque des revendications 1 à 7, le moule (1) comprenant une matrice (6) et un poinçon (4), délimitant une chambre de moulage (8), le poinçon (4) comprenant une broche de compactage (10) faisant saillie à partir du poinçon (4) de sorte à diminuer localement l'épaisseur de la chambre de moulage (8), l'opercule (20) étant formé dans l'espace réduit restant entre l'extrémité libre (14) de la broche de compactage et la matrice (6), de préférence entre une contreforme (16) en saillie par rapport à la matrice en regard de l'extrémité libre de la broche de compactage (10), l'opercule étant formé sensiblement à égale distance de deux parois (18a, 18b) de l'élément.

## Patentansprüche

1. Verfahren zur Herstellung eines umspritzten Teils (2), das ein Strukturteil eines Kraftfahrzeugs bildet, umfassend:
- einen Formungsschritt, bei dem mindestens ein Element (18) des Teils aus einem ersten duroplastischen Material aus dem Kunstharz unter Verwendung einer Form (1) geformt wird, die so geformt ist, dass mindestens ein Abschnitt des Elements (18) eine Abdeckung (20) aus Material bildet, die eine nicht durchgehende Öffnung (22) verschließt,
- einen Schritt des Umspritzens, bei dem ein zweites duroplastisches Harzmaterial (24) überspritzt wird, so dass die Abdeckung (20) unter dem Einspritzdruck bricht und die Öffnung (22) mit dem zweiten Material (24) durch das Element (18) gefüllt wird, **dadurch gekennzeichnet, dass** der Teil des Elements (18), der aus einem ersten Material besteht, auf der Höhe der Abdeckung (20) durch zwei gegenüberliegende Wände (18a, 18b) begrenzt ist, und dass die Abdeckung (20) durch mindestens zwei gegenüberliegende Flächen (20a) begrenzt ist, die Abdeckung (20) in der Dicke des Elements (18) ausgebildet ist, so dass die Oberflächen (20a, 20b) des Deckels jeweils in einem von Null verschiedenen Abstand von den Wänden (18a, 18b) des Elements liegen.

2. Verfahren nach Anspruch 1, wobei die Abdeckung (20) im Wesentlichen äquidistant zu zwei Wänden (18a, 18b) des Elements ausgebildet ist.

3. Verfahren nach einem der vorhergehenden Ansprüche, wobei die Form (1) eine Matrize (6) und einen Stempel (4) aufweist, die eine Formkammer (8) begrenzen, wobei der Stempel (4) einen Verdichtungsstift (10) aufweist, der von dem Stempel (4) vorsteht, um die Dicke der Formkammer (8) lokal zu verringern, wobei der Verdichtungsstift (10) zwischen dem freien Ende (14) des Verdichtungsstifts (10) und der Matrize (6), vorzugsweise zwischen einer Gegenform (16) an dem freien Ende (14) der Matrize (6) und dem Stempel (4), angeordnet ist, und wobei die Abdeckung (20) in dem reduzierten Raum, der zwischen dem freien Ende (14) des Verdichtungsstifts und der Matrize (6) verbleibt, vorzugsweise zwischen einer Gegenform (16), die von der Matrize gegenüber dem freien Ende des Verdichtungsstifts (10) vorsteht, gebildet wird.

4. Verfahren nach Anspruch 3, wobei das freie Ende (14) des Verdichtungsstifts einen Umdrehungsabschnitt aufweist, der sich zum freien Ende (14) des Verdichtungsstifts hin im Querschnitt verringert, um eine Verringerung der Querschnittsfläche der Öffnung (22) zu erzeugen.

5. Verfahren nach Anspruch 3 oder 4, wobei die Gegenform (16) einen relativ zum freien Ende (14) des Verdichtungsstifts verringerten Querschnitt aufweist, um eine Verringerung der Querschnittsfläche der Öffnung (22) zu erzeugen.

6. Verfahren nach einem der vorhergehenden Ansprüche, wobei das erste Material ein kohlenstofffaserverstärkter Verbundwerkstoff ist, vorzugsweise im Wesentlichen ausschließlich aus Kohlenstofffasern.

7. Verfahren nach einem der vorhergehenden Ansprüche, wobei die Dicke der Abdeckung (20) weniger als 0,5 mm, vorzugsweise weniger als 0,3 mm beträgt.

8. Verfahren nach einem der vorhergehenden Ansprüche, wobei eine Rippe (30) aus dem zweiten Material (24) gebildet wird, die mindestens ein durch das Strukturelement gebildete Öffnung (22) abdeckt.

9. Form zur Herstellung eines umspritzten Teils, **dadurch gekennzeichnet, dass sie** zur Durchführung des Verfahrens nach einem der Ansprüche 1 bis 7 konfiguriert ist, wobei die Form (1) eine Matrize (6) und einen Stempel (4) umfasst, die eine Formkammer (8) begrenzen, wobei der Stempel (4) einen Verdichtungsstift (10) umfasst, der aus der Stempel (4) herausragt, um die Dicke der Formkammer (8) lokal zu verringern, wobei die Abdeckung (20) in dem reduzierten Raum ausgebildet ist, der zwischen dem freien Ende (14) des Verdichtungsstifts und der Matrize (6) verbleibt, vorzugsweise zwischen einer Gegenform (16), die von der Matrize gegenüber dem freien Ende des Verdichtungsstifts (10) vorsteht, wobei die Abdeckung im Wesentlichen in gleichem Abstand zu zwei Wänden (18a, 18b) des Elements ausgebildet ist.

## Claims

1. A method for manufacturing an overmoulded part (2) forming a structural part of a motor vehicle, comprising :
- a moulding step during which at least one element (18) of the part is moulded from a first thermosetting resin-based material, using a mould (1) shaped so that at least one portion of the element (18) forms a coverplate (20) of material closing a non-through orifice (22),
- an injection overmoulding step in which a second material (24) based on thermoplastic resin is overmoulded, so that the closure (20) breaks under the injection pressure and the orifice (22) is filled with the second material (24) through the element (18),
**characterized in that,** the portion of the element (18) made of a first material being delimited, at the level of the coverplate (20), by two opposite walls (18a, 18b), and the coverplate (20) being delimited by at least two opposite surfaces (20a, 20b), the coverplate (20) is formed in the thickness of the element (18), such that each of the surfaces (20a, 20b) of the coverplate are at a non-zero distance from the walls (18a, 18b) of the element.

2. Manufacturing method according to claim 1, wherein the coverplate (20) is formed substantially equidistant from two walls (18a, 18b) of the member.

3. Manufacturing method according to any of the preceding claims, wherein the mould (1) comprises a die (6) and a punch (4), delimiting a moulding chamber (8), the punch (4) comprising a compaction pin (10) projecting from the punch (4) so as to locally decrease the thickness of the moulding chamber (8), the coverplate (20) being formed in the remaining reduced space between the free end (14) of the compaction pin and the die (6), preferably between a counter-form (16) projecting from the die opposite the free end of the compaction pin (10).

4. Manufacturing method according to claim 3, wherein the free end (14) of the compaction pin comprises a portion of revolution the cross-section of which becomes smaller towards the free end (14) of the compaction pin, so as to create a reduction in the passing cross-section of the orifice (22).

5. Manufacturing method according to claim 3 or 4, wherein the counterform (16) is of revolution and reduced in cross-section relative to the free end (14) of the compaction pin, so as to create a reduction in the cross-sectional area of the orifice (22).

6. Manufacturing method according to any one of the preceding claims, wherein the first material is a carbon fibre reinforced composite material, preferably substantially solely by carbon fibres.

7. Manufacturing method according to any of the preceding claims, wherein the thickness of the coverplate (20) is less than 0.5 mm, preferably less than 0.3 mm.

8. Manufacturing method according to any one of the preceding claims, wherein a rib (30), made of the second material (24), is formed over at least one orifice (22) formed through the structural member.

9. A mould for manufacturing an overmoulded part, **characterised in that it** is configured to carry out the method according to any one of claims 1 to 7, the mould (1) comprising a die (6) and a punch (4), delimiting a moulding chamber (8), the punch (4) comprising a compaction pin (10) projecting from the punch (4) so as to locally reduce the thickness of the moulding chamber (8), the coverplate (20) being formed in the remaining reduced space between the free end (14) of the compaction pin and the die (6), preferably between a counter-shape (16) projecting from the die opposite the free end of the compaction pin (10), the coverplate being formed substantially equidistant from two walls (18a, 18b) of the element.
